# EUROPÄISCHE PATENTANMELDUNG

(11) **EP 2 610 459 A2**
(43) Veröffentlichungstag der Anmeldung: **03.07.2013**
(21) Anmeldenummer: 12199390.1
(22) Anmeldetag: 27.12.2012
(51) Int. Cl.: F02B 23/06

(54) **Direkteinspritzende Brennkraftmaschine und Kraftstoffeinspritzventil**

(30) Priorität: 28.12.2011 DE 102011090005
(71) Anmelder: ROBERT BOSCH GMBH, 70442 Stuttgart (DE)
(72) Erfinder: Heinold, Oliver, 70839 Gerlingen-Gehenbuehl (DE); Kaefer, Sebastian, 70197 Stuttgart (DE)

(57) **Zusammenfassung**

Die Erfindung betrifft eine direkteinspritzende Brennkraftmaschine (100), mit einem Brennraum (10), in dem ein zwischen einem unteren Totpunkt (UT) und einem oberen Totpunkt (OT) entlang einer Kolbenlängsachse (12) auf- und abbewegbarer Kolben (15) angeordnet ist, und mit einem in den Brennraum (10) hineinragenden Kraftstoffeinspritzventil (20; 20a bis 20c) mit wenigstens einer Einspritzöffnung 33; 33b, 34; 34b; 36, 37) zum Einspritzen von Kraftstoff in den Brennraum (10), wobei der Kolben (15) auf der dem Kraftstoffeinspritzventil (20; 20a bis 20c) zugewandten Seite wenigstens eine Ausnehmung (25; 25b; 25c; 25d) aufweist. Erfindungsgemäß ist es vorgesehen, dass das Kraftstoffeinspritzventil (20; 20a bis 20c) mit einem dem Kolben (15) zugewandten Endbereich (21; 21a bis 21d) zumindest im Bereich des oberen Totpunkt (OT) des Kolbens (15) mit einem Teilabschnitt in die Ausnehmung (25; 25b; 25c; 25d) des Kolbens (15) hineinragt, und dass die Ausnehmung (25; 25b; 25c; 25d) einen Abschnitt (26; 26b; 26c) aufweist, der zumindest den in die Ausnehmung (25; 25b; 25c; 25d) hineinragenden Teilabschnitt des Kraftstoffeinspritzventils (20; 20a bis 20c) unter Ausbildung eines Strömungsspalts (30; 30b) mit geringem Abstand umgibt.

## Beschreibung

### Stand der Technik

Die Erfindung betrifft eine direkteinspritzende Brennkraftmaschine nach dem Oberbegriff des Anspruchs 1. Ferner betrifft die Erfindung ein Kraftstoffeinspritzventil zur Verwendung bei einer erfindungsgemäßen direkteinspritzenden Brennkraftmaschine.

Eine Brennkraftmaschine nach dem Oberbegriff des Anspruchs 1 ist aus der FR 2 911 373 A1 bekannt. Die bekannte Brennkraftmaschine weist ein Kraftstoffeinspritzventil mit mehreren Einspritzöffnungen auf, wobei das Kraftstoffeinspritzventil in der Längsachse des Kolbens angeordnet ist. Auf der dem Kraftstoffeinspritzventil zugewandten Stirnseite des Kolbens sind vier nierenförmige Ausnehmungen vorgesehen, in die das Kraftstoffeinspritzventil über seine Einspritzöffnungen den Kraftstoff einspritzt, wenn sich der Kolben bei der Aufwärtsbewegung seinem oberen Totpunkt nähert. Derartige Ausnehmungen dienen beim Stand der Technik üblicherweise dazu, bestimmte Strömungsverhältnisse des Kraftstoffs bzw. der Kraftstofftröpfchen in dem Brennraum zu erzeugen bzw. eine möglichst vollständige Verbrennung des Kraftstoffs bzw. einen beispielsweise sanften Druckanstieg im Brennraum zu ermöglichen. Moderne, direkteinspritzende Brennkraftmaschinen benötigen sehr hohe Einspritzdrücke (bei selbstzündenden Brennkraftmaschinen bis zu 2500bar, bei fremdgezündeten Brennkraftmaschinen bis zu 200bar), damit der Kraftstoff durch die Wechselwirkung mit der umgebenden Luft in kleine Tröpfchen zerfallen kann. Hierbei bestimmt die Austrittsgeschwindigkeit des Kraftstoffs aus dem Kraftstoffeinspritzventil die Intensität des Strahlzerfalls des Kraftstoffs und die Größe der Tröpfchen. Durch den Tropfenzerfall des Kraftstoffs werden die Kraftstoffoberfläche und die Kraftstoffverdampfung beschleunigt. Die genannten relativ hohen Einspritzdrücke werden aufgebracht, da das Einbringen des flüssigen Kraftstoffs in den Brennraum der Brennkraftmaschine mit hohem Impuls die Durchmischung des Kraftstoffs mit der Luft verbessert bzw. insbesondere eine gleichmäßige und großflächige Verteilung des Kraftstoffs in dem Brennraum fördert. Nachteilig bei den aus dem Stand der Technik bekannten, direkteinspritzenden Brennkraftmaschinen mit den relativ hohen Einspritzdrücke ist es, dass derartige Hochdruckeinspritzsysteme relativ komplex ausgebildet sind und daher auch relativ hohe Herstellkosten verursachen, beispielsweise durch deren aufwendig gestaltete Kraftstoffventile sowie einen hohen Förderdruck leistende Pumpen für den Kraftstoff.

### Offenbarung der Erfindung

Ausgehend von dem dargestellten Stand der Technik liegt der Erfindung die Aufgabe zugrunde, eine direkteinspritzende Brennkraftmaschine nach dem Oberbegriff des Anspruchs 1 derart weiterzubilden, dass diese auch bei Bereitstellung eines gegenüber dem Stand der Technik deutlich verringerten Einspritzdrucks mit hohem Wirkungsgrad arbeitet sowie auch z.B. bezüglich der Schadstoffemission relativ günstige Voraussetzungen bietet. Diese Aufgabe wird erfindungsgemäß bei einer direkteinspritzenden Brennkraftmaschine mit den Merkmalen des Anspruchs 1 dadurch gelöst, dass das Kraftstoffeinspritzventil mit einem dem Kolben zugewandten Endbereich zumindest im Bereich des oberen Totpunkts des Kolbens mit einem Teilabschnitt in die Ausnehmung des Kolbens hineinragt, und dass die Ausnehmung einen Abschnitt aufweist, der zumindest den in die Ausnehmung hineinragenden Teilabschnitt des Kraftstoffeinspritzventils unter Ausbildung eines Strömungsspalts mit geringem Abstand umgibt. Der Erfindung liegt dabei die Idee zugrunde, die zur Gemischbildung benötigte Energie durch eine gegenüber dem Stand der Technik signifikant erhöhte Luftbewegung, erzeugt durch die Relativbewegung des Kolbens zu dem aus dem Kraftstoffeinspritzventil austretendem Kraftstoff bereitzustellen, wodurch der erforderliche Einspritzdruck abgesenkt werden kann, um vergleichbare Tropfenzerfallsbedingungen zu erhalten. Dabei wird die erhöhte Luftbewegung erfindungsgemäß durch eine Strömung durch einen Strömungsspalt erzielt, die dann entsteht, wenn bei der Relativbewegung zwischen dem Kolben und dem Einspritzventil die oberhalb des Kolbens befindliche Luft komprimiert wird und über den Strömungsspalt in die Ausnehmung des Kolbens einströmt. Dadurch entsteht in dem Strömungsspalt eine Luftströmung mit relativ hoher Geschwindigkeit, die dazu genutzt wird, durch zeitlich und örtlich geeignete Einspritzung des Kraftstoffs in Wechselwirkung mit dem Kraftstoff zu gelangen, und diesen dabei zu zerstäuben bzw. entsprechend für die Zündung aufzubereiten.

Vorteilhafte Weiterbildungen der erfindungsgemäßen direkteinspritzenden Brennkraftmaschine sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

In bevorzugter geometrischer Ausgestaltung der Ausnehmung wird vorgeschlagen, dass sich der Abschnitt der Ausnehmung in Richtung zu der dem Kraftstoffeinspritzventil abgewandten Seite in Art eines Hinterschnitts erweitert. Dadurch wird in dem Bereich des Hinterschnitts ein genügend großer Raum bereitgestellt, der die oberhalb des Kolbens befindliche Luft bei der Aufwärtsbewegung des Kolbens aufnehmen kann, so dass insbesondere bei der Aufwärtsbewegung des Kolbens in der Ausnehmung selbst bzw. im Bereich des Hinterschnitts ein geringerer Druck herrscht als oberhalb des Kolbens, was die Strömungsgeschwindigkeit im Bereich des Strömungsspalts erhöht.

Um beispielsweise eine gleichmäßige mechanische bzw. thermische Belastung des Kolbens zu erzielen, wird darüber hinaus vorgeschlagen, dass zumindest der Teilabschnitt des Endbereichs des Kraftstoffeinspritzventils zylindrisch ausgebildet und vorzugsweise in der Kolbenlängsachse angeordnet ist, wobei die Ausnehmung symmetrisch zur Kolbenlängsachse ausgebildet ist.

Die eigentliche Gemischbildung bzw. das Zersträuben des Kraftstoffs durch die Relativbewegung des Kraftstoffs zu der Luftströmung, die über den Strömungsspalt erzeugt wird, kann auf verschiedene Art und Weise erfolgen. In einer ersten Ausgestaltung ist es vorgesehen, dass die Ausnehmung in dem den Teilabschnitt unmittelbar umgebenden Bereich einen Wandabschnitt aufweist, in dessen Richtung beim Eintauchen des Endbereichs Kraftstoff über die wenigstens eine Einspritzungsöffnung abgegeben wird. Dadurch gelangt der Kraftstoff beim Austreten aus der Einspritzöffnung unmittelbar in den Bereich des Strömungsspalts, in dem die höchste Strömungsgeschwindigkeit der komprimierten Luft herrscht.

Um die Relativgeschwindigkeit zwischen dem aus der Einspritzöffnung austretenden Kraftstoff und der Luftströmung zu erhöhen, wird darüber hinaus vorgeschlagen, dass die wenigstens eine Einspritzöffnung zumindest im Wesentlichen in Richtung auf den Wandabschnitt ausgerichtet ist.

In alternativer, oder aber beim Vorhandensein einer Vielzahl von in Bezug auf die Kolbenlängsachse auf unterschiedlichem Niveau befindlichen Einspritzöffnungen des Kraftstoffeinspritzventils ist es auch möglich, dass die wenigstens eine Einspritzöffnung des Kraftstoffeinspritzventils beim Erreichen des oberen Totpunkt des Kolbens unterhalb des Abschnitts der Ausnehmung angeordnet ist. In diesem Fall kann der Kraftstoff über die Einspritzöffnungen beispielsweise unmittelbar in die sich erweiternde Ausnehmung eingespritzt werden, ohne dass dieser zunächst auf eine Wand des Kolbens auftrifft. Dabei wird der austretende Kraftstoff von der über den Strömungsspalt in die sich erweiterte Ausnehmung einströmende Luftströmung mitgerissen und in der Ausnehmung entsprechend aufbereitet.

Zur Erzeugung der gewünschten relativ hohen Strömungsgeschwindigkeiten in dem Strömungsspalt hat sich eine geometrische Dimensionierung als vorteilhaft erwiesen, bei der der zwischen dem Teilabschnitt des Endbereichs des Kraftstoffeinspritzventils und dem Abschnitt ausgebildete Strömungsspalt eine Größe zwischen 1 mm und 5mm, vorzugsweise zwischen 2 mm und 4 mm, aufweist.

Erfindungsgemäß ist es auch denkbar, dass in dem Brennraum neben dem Endbereich des Kraftstoffeinspritzventils eine Glüheinrichtung in Form eines Glühstifts angeordnet ist, und dass der Glühstift im Bereich des oberen Totpunkts des Kolbens in die Ausnehmung bereichsweise eintaucht. Durch eine derartige Ausbildung werden insbesondere bei einer selbstzündenden Brennkraftmaschine eine gute Kaltstartfähigkeit sowie relativ gute Abgaswerte erzielt.

Die Erfindung umfasst auch ein Kraftstoffeinspritzventil zur Verwendung in einer erfindungsgemäßen Brennkraftmaschine. Ganz besonders bevorzugt ist dabei der Einsatz des Kraftstoffeinspritzventils bei Kraftstoffeinspritzsystemen, bei denen der Einspritzdruck bei selbstzündenden Brennkraftmaschinen größer als 150 bar, und bei Verwendung in einer fremdzündenden Brennkraftmaschine größer als 70 bar ist. Der Einspritzdruck muss dabei in jedem Fall größer sein als der zum Zeitpunkt der Einspritzung herrschende Brennraumdruck, der bei der Erfindung bei einer selbstzündenden Brennkraftmaschine im Bereich von etwa 30-100 bar, und bei einer fremdgezündeten Brennkraftmaschine im Bereich von etwa 20-50 bar liegt.

Weitere Vorteile, Merkmale und Einzelheiten der Erfindungen ergeben sich aus der nachfolgenden Beschreibung bevorzugter Ausführungsbeispiele sowie anhand der Zeichnung.

Diese zeigt in:
- Fig. 1: den prinzipiellen Aufbau eines Brennraums bei einer erfindungsgemäßen, direkteinspritzenden Brennkraftmaschine in einem vereinfachten Längsschnitt,
- Fig. 2: eine erste konstruktive Ausgestaltung eines Kraftstoffeinspritzventils bei einer erfindungsgemäßen Brennkraftmaschine im Längsschnitt,
- Fig. 3: eine alternative Ausgestaltung des Kraftstoffeinspritzventils und eines Brennraums, ebenfalls im Längsschnitt,
- Fig. 4: eine konstruktive Ausgestaltung des Kraftstoffeinspritzventils unter Verwendung mehrerer, auf unterschiedlichem Niveau befindlicher Einspritzöffnungen an einem Kraftstoffeinspritzventil im Längsschnitt,
- Fig. 5: eine Prinzipdarstellung einer Anordnung eines Brennraums unter Verwendung einer zusätzlichen Glüheinrichtung in Form eines Glühstifts im Längsschnitt und
- Fig. 6 bis 9: den Verbrennungsvorgang bei einer erfindungsgemäßen Brennkraftmaschine unter Verwendung eines Kraftstoffeinspritzventils bzw. einer Anordnung gemäß Fig. 3 während verschiedener Phasen der Bewegung des Kolbens in vereinfachten Längsschnitten.

Gleiche Bauteile bzw. Bauteile mit gleicher Funktion sind in den Figuren mit gleichen Bezugsziffern versehen.

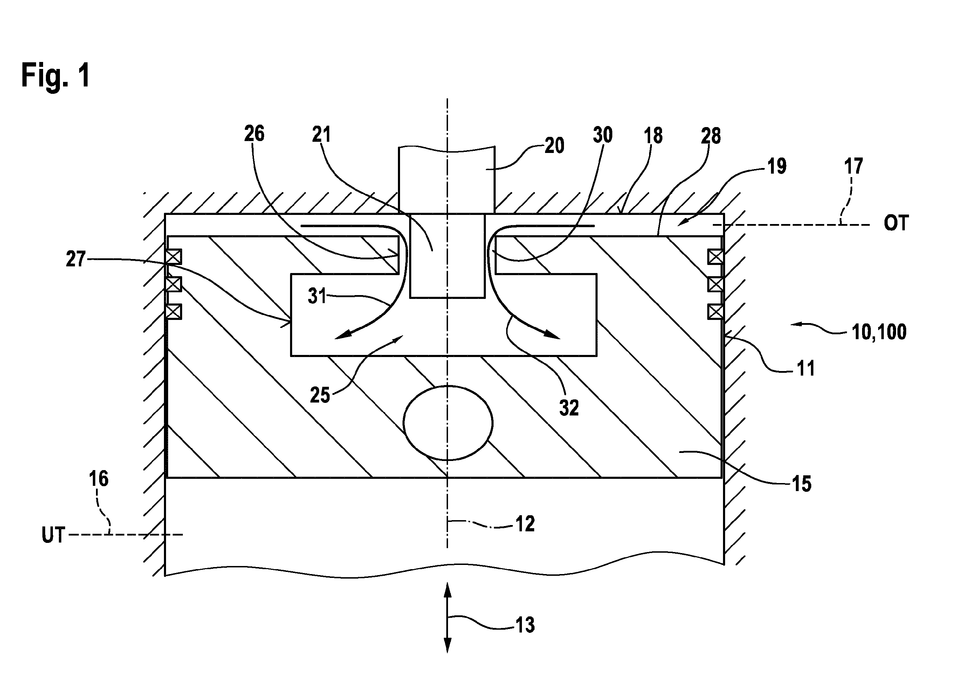

In der Fig. 1 ist der Bereich eines Brennraums 10 eines Zylinderkopfs einer erfindungsgemäßen direkteinspritzenden Brennkraftmaschine 100 dargestellt. Der Brennraum 10 umfasst einen in einer Kolbenbohrung 11 entlang einer Kolbenlängsachse 12 in Richtung des Doppelpfeils 13 auf- und abbeweglich angeordneten Kolben 15. Der Kolben 15 wird in üblicher Art und Weise über eine Pleuelstange von einer nicht dargestellten Kurbelwelle der Brennkraftmaschine 100 bewegt. Der Kolben 15 ist zwischen einem in der Fig. 1 durch eine Linie lediglich angedeutet dargestellten unteren Totpunkt 16 und einem ebenfalls durch eine Linie dargestellten oberen Totpunkt 17 bewegbar, wobei der untere Totpunkt 16 und der obere Totpunkt 17 die Umkehrpunkte des Kolbens 15 bei dessen Bewegung darstellen. Oberhalb des oberen Totpunkts 17 ist zwischen dem Kolben 15 und einer oberen Begrenzung 18 des Brennraums 10 noch ein Totvolumen 19 ausgebildet. In den Brennraum 10 münden in an sich bekannter, und daher nicht dargestellter Art und Weise Ein- und Auslassventile, über die Frischluft in den Brennraum 10 gelangt bzw. nach dem Verbrennungsprozess die Abgase aus dem Brennraum 10 ausgeleitet werden.

In den Brennraum 10 ragt ein Kraftstoffeinspritzventil 20 mit einem Endbereich 21 hinein. Der Endbereich 21 ist insbesondere zylindrisch ausgebildet, wobei bei dem in der Fig. 1 dargestellten Ausführungsbeispiel das Kraftstoffeinspritzventil 20 bzw. der Endbereich 21 in der Kolbenlängsachse 12 angeordnet sind. Das Kraftstoffeinspritzventil 20 dient dem Einspritzen von Kraftstoff (Benzin oder Diesel) in den Brennraum 10 der Brennkraftmaschine 100 mittels in der Fig. 1 nicht dargestellter Einspritzöffnungen. Das Einspritzen des Kraftstoffs in den Brennraum 10 über das Kraftstoffeinspritzventil 20 erfolgt dabei insbesondere in Abhängigkeit der Last und der Drehzahl der Brennkraftmaschine 100 üblicherweise in einem Zeit- bzw. Kurbelwellenwinkelfenster, das beispielsweise bei einem Winkel von 30° der Kurbelwellenstellung (KW) vor dem oberen Totpunkt 17 beginnt und üblicherweise etwa 30° der Kurbelwellenstellung (KW) nach dem oberen Totpunkt 17 beendet ist. Jedoch kann auch eine Einspritzung zu einer anderen Kurbelwellenstellung erfolgen bzw. die Einspritzung kann auch mehrere Teileinspritzungen umfassen.

Der Kolben 15 weist auf der dem Kraftstoffeinspritzventil 20 zugewandten Seite eine erfindungswesentliche Ausnehmung 25 auf. Die Ausnehmung 25 ist beispielhaft symmetrisch zur Kolbenlängsachse 12 ausgebildet und umfasst einen kragenförmigen ersten Abschnitt 26, der sich in Art eines Hinterschnitts in einen zweiten, zylindrischen Abschnitt 27 erweitert. Die Ausnehmung 25 bzw. die beiden Abschnitte 26, 27 sind in der Fig. 1 lediglich stark vereinfacht dargestellt, um das Wirkprinzip einer erfindungsgemäßen Ausnehmung 25 darzustellen. Wesentlich ist, dass in der in der Fig. 1 dargestellten Stellung, bei der der Kolben 15 bzw. dessen Kolbenoberseite 28 sich im Bereich des oberen Totpunkts 17 befindet, der Endbereich 21 des Kraftstoffeinspritzventils 20 in den ersten, kragenförmigen Abschnitt 26 der Ausnehmung 25 eintaucht. Dabei wird im dargestellten Ausführungsbeispiel durch die zylindrische Form des ersten Abschnitts 26 der Ausnehmung 25 zwischen dem ersten Abschnitt 26 und dem Außenumfang des Endbereichs 21 des Kraftstoffeinspritzventils 20 ein ring- bzw. hülsenförmiger Strömungsspalt 30 ausgebildet. Die Spaltbreite des Strömungsspalts 30 beträgt üblicherweise zwischen 1 mm und 5 mm, vorzugsweise zwischen 2mm und 4mm, besonders bevorzugt etwa 3 mm.

Das Wirkprinzip der Erfindung beruht darauf, dass bei einer Aufwärtsbewegung des Kolbens 15 in Richtung zum oberen Totpunkt 17 die in dem Totvolumen 19 befindliche Luft (bei geschlossenen Ein- und Auslassventilen) verdichtet wird und über den Strömungsspalt 30 aus dem oberen Totvolumen 19 in den zweiten Abschnitt 27 der Ausnehmung 25 verdrängt wird. Da der Strömungsspalt 30 lediglich einen relativ geringen Strömungsquerschnitt für die komprimierte Luft im Totvolumen 19 ausbildet, erfolgt das Überströmen der komprimierten Luft aus dem Totvolumen 19 in den zweiten Abschnitt 27 unter einer starken Beschleunigung der Luftströmung 31, 32, wobei die Strömungsgeschwindigkeit der Luftströmung 31, 32 im Strömungsspalt 30 ihr Maximum aufweist. Hierbei wird die Strömungsenergie der komprimierten Luft genutzt, um den in den Brennraum 10 eingespritzten Kraftstoff in gewünschter Art und Weise zu zerstäuben bzw. aufzubereiten, indem die aus dem Kraftstoffeinspritzventil 20 austretenden Kraftstofftröpfchen bzw. der Einspritzstrahl durch die Luftströmung zerrissen wird, so dass die Kraftstofftröpfchen eine vergrößerte Oberfläche aufweisen, um die Verbrennung zu begünstigen bzw. zu optimieren.

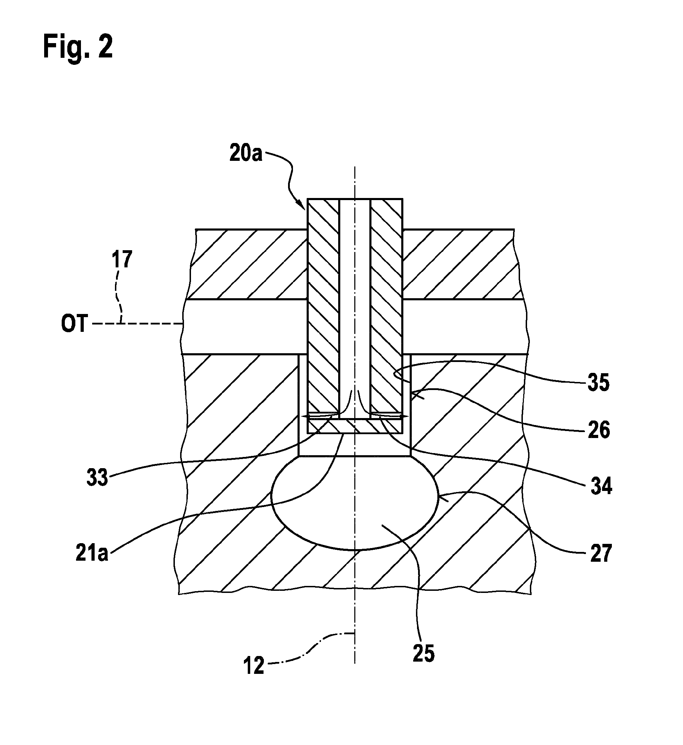

In der Fig. 2 ist eine erste konstruktive Ausgestaltung eines Kraftstoffeinspritzventils 20a dargestellt. Das Kraftstoffeinspritzventil 20a weist an seinem unteren Endbereich 21 a mehrere, vorzugsweise in gleich großen Winkelabständen zueinander angeordnete, radial ausgerichtete Einspritzöffnungen 33, 34 auf, deren Kraftstoffstrahl 1 in Richtung des ersten Abschnitts 26 der Ausnehmung 25 austreten. Im dargestellten Ausführungsbeispiel ist die Ausrichtung der Einspritzöffnungen 33, 34 senkrecht zur Wand 35 des ersten Abschnitts 26 der Ausnehmung 25 bzw. senkrecht zur Kolbenlängsachse 12. Innerhalb des Kraftstoffeinspritzventils 20a ist in üblicher Art und Weise beispielsweise eine Düsennadel angeordnet, über deren Bewegung ein Verschließen bzw. Öffnen der Einspritzöffnungen 33, 34 bzw. ein entsprechendes Einspritzen des Kraftstoffs in den Brennraum 10 gesteuert wird.

In Abänderung der Darstellung des Kraftstoffeinspritzventils 20a kann dieses auch als sogenanntes Drallventil, Mehrlochventil oder Ringspaltventil ausgebildet sein, wie diese aus dem Bereich der Benzindirekteinspritzung bereits bekannt sind.

Falls die Brennkraftmaschine 100 als fremdgezündete Brennkraftmaschine 100 ausgebildet ist, so weist der in dem Kraftstoffeinspritzventil 20a herrschende Systemdruck beispielsweise einen Druck von mehr als 70bar auf. Bei der Ausbildung der Brennkraftmaschine 100 als selbstzündende Brennkraftmaschine 100 weist der Systemdruck in dem Kraftstoffeinspritzventil 20a demgegenüber vorzugsweise einen Druck von mehr als 150 bar auf.

Wesentlich bei dem in der Fig. 2 dargestellten Ausführungsbeispiel ist es, dass die Steuerung der Einspritzung von Kraftstoff in den Brennraum 10 bzw. die geometrische Ausbildung der Ausnehmung 25 derart erfolgt, dass bei der Aufwärtsbewegung des Kolbens 15 in Richtung des oberen Totpunkts 17 das Kraftstoffeinspritzventil 20a mit seinem Endbereich 21 a in den ersten Abschnitt 26 eintaucht, und spätestens beim Eintauchen in den ersten Abschnitt 26 Kraftstoff über das Kraftstoffeinspritzventil 20a bzw. dessen Einspritzöffnungen 33, 34 abgegeben wird. Der Kraftstoffstrahl 1 trifft dabei auf die Wand 35 des ersten Abschnitts 26 auf und wird durch die unter hoher Strömungsgeschwindigkeit durch den Strömungsspalt 30 in Richtung des im Ausführungsbeispiel teilkugelförmigen zweiten Abschnitts 27 strömende, komprimierte Luft mitgerissen bzw. in kleinste Mikrotröpfchen verteilt, die eine große Oberfläche zur anschließenden Verbrennung aufweisen, so dass die Verbrennung mit hohem Wirkungsgrad und unter Erzeugung nur relativ geringer Schadstoffmengen erfolgen kann.

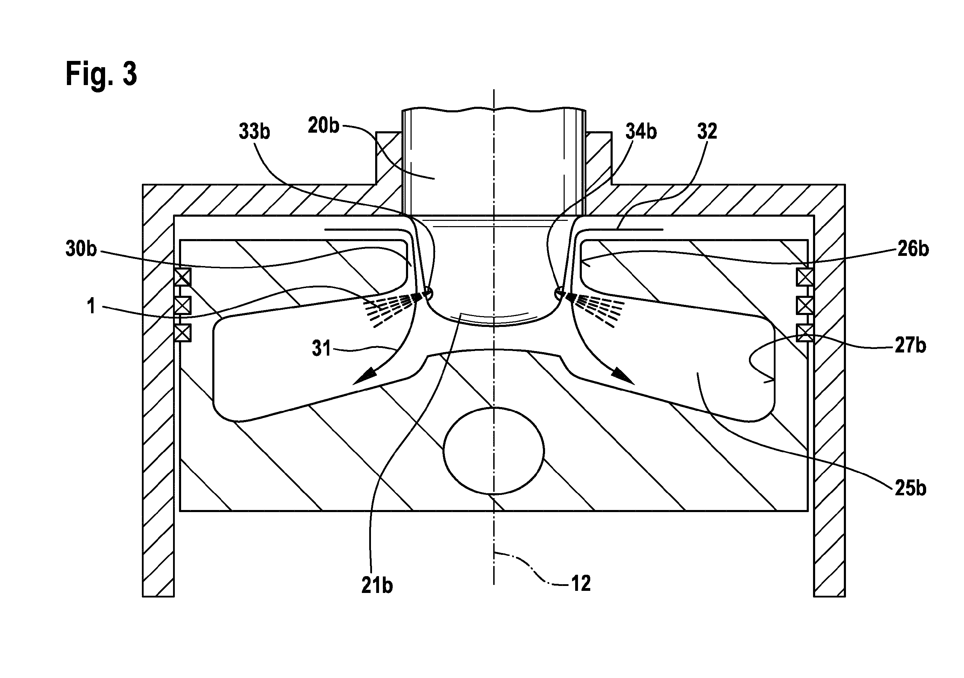

Bei dem in der Fig. 3 dargestellten Ausführungsbeispiel der Erfindung sind die Einspritzöffnungen 33b, 34b am Endbereich 21 b des Kraftstoffeinspritzventils 20b nicht senkrecht zur Kolbenlängsachse 12, sondern etwas schräg in Ausrichtung zu dem zweiten Abschnitt 27b der Ausnehmung 25b ausgerichtet. Wesentlich bei dem in der Fig. 3 dargestellten Ausführungsbeispiel ist es, dass das Einspritzen des Kraftstoffs (Kraftstoffstrahl 1) direkt in den zweiten Abschnitt 27b erfolgt, d.h., dass der Kraftstoff erst dann eingespritzt wird, wenn der Endbereich 21 b mit dessen Einspritzöffnungen 33b, 34b den ersten Abschnitt 26b der Ausnehmung 25b passiert hat. Dabei wird der aus den Einspritzöffnungen 33b, 34b austretende Kraftstoff durch die Luftströmung 31, 32 verwirbelt bzw. aufbereitet, wobei nichts desto trotz der Kraftstoffstrahl 1 relativ weit in den zweiten Abschnitt 27b der Ausnehmung 25b eingespritzt wird. Weiterhin vergrößert sich der Strömungsspalt 30b bei der Fig. 3, im Gegensatz zu dem Strömungsspalt 30 bei der Fig. 2, in Längsrichtung der Kolbenlängsachse 12 in Richtung zum Kolben 15 hin. Dies erfolgt beispielhaft durch eine leicht konische Form des Endbereichs 21 b des Kraftstoffeinspritzventils 20b.

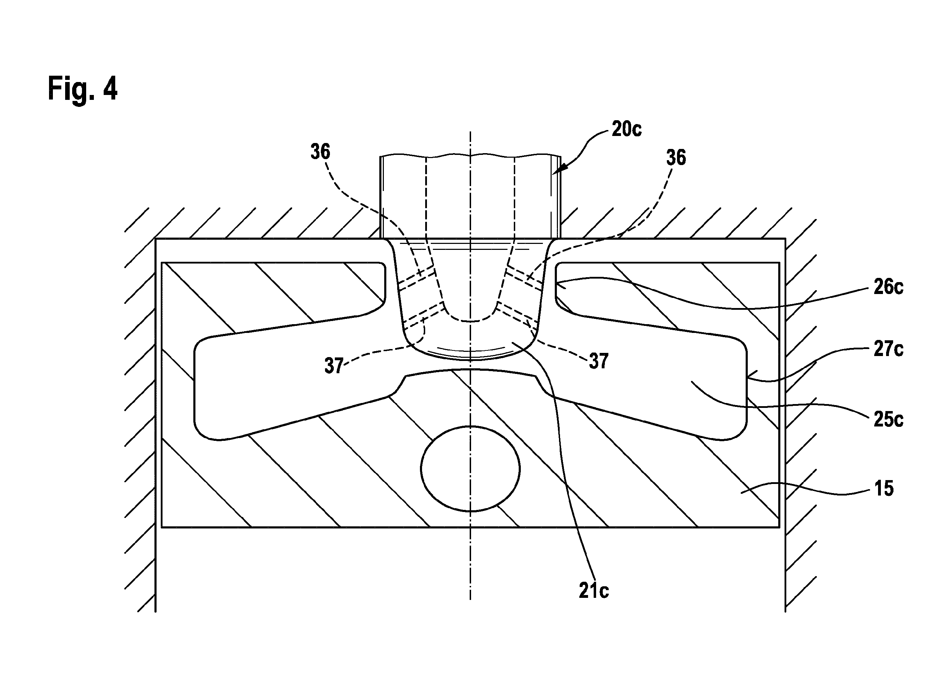

In der Fig. 4 ist eine Ausführungsform der Erfindung dargestellt, bei der das Kraftstoffeinspritzventil 20c einen Endbereich 21c aufweist, in dem mehrere, in axialer Richtung des Endbereichs 21 c übereinander angeordnete Einspritzöffnungen 36, 37 ausgebildet sind, wobei die einen Einspritzöffnungen 36 und die anderen Einspritzöffnungen 37 sich jeweils auf gleicher Höhe des Endbereichs 21c befinden. Während sich die Einspritzöffnungen 36 beim Einspritzen des Kraftstoffs im Bereich des ersten Abschnitts 26c der Ausnehmung 25c befinden, befinden sich die anderen Einspritzöffnungen 37 in Höhe des zweiten Abschnitts 27c der Ausnehmung 25c. Das Ausführungsbeispiel gemäß der Fig. 4 verbindet somit die geometrischen Anordnungen der Einspritzöffnungen 33, 34 und 33b, 34b der beiden Kraftstoffeinspritzventile 20a und 20b.

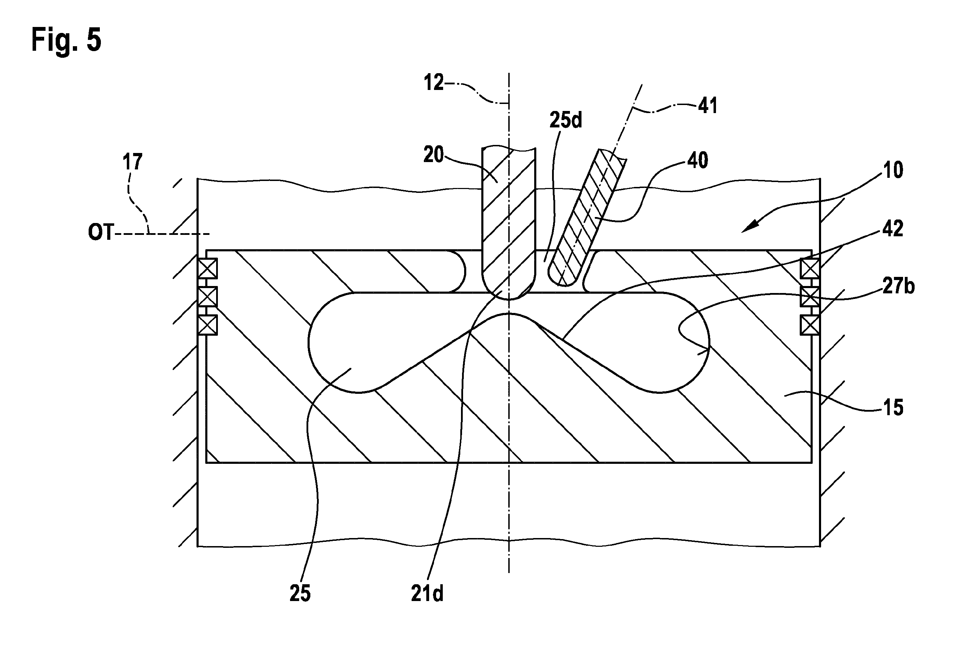

In der Fig. 5 ist ein Ausführungsbeispiel der Erfindung dargestellt, bei dem neben dem Kraftstoffeinspritzventil 20 eine Glüheinrichtung in Form eines Glühstifts 40 angeordnet ist. Das Kraftstoffeinspritzventil 20 und der Glühstift 40 ragen in etwa gleich weit in den Brennraum 10 der Brennkraftmaschine 100 hinein, und sind im Bereich des oberen Totpunkts 17 gemeinsam von der Ausnehmung 25d umgeben. Hierbei ist das Kraftstoffeinspritzventil 20 in der Kolbenlängsachse 12 angeordnet, während der Glühstift 40 mit seiner Längsachse 41 sich seitlich in einem Winkel zur Kolbenlängsachse 12 befindet. Ferner weist die zweite Ausnehmung 27b eine Form auf, bei der sich ein Bodenbereich 42 der Ausnehmung 25d kegelförmig in Richtung zum Endbereich 21d des Kraftstoffeinspritzventils 20 erhebt.

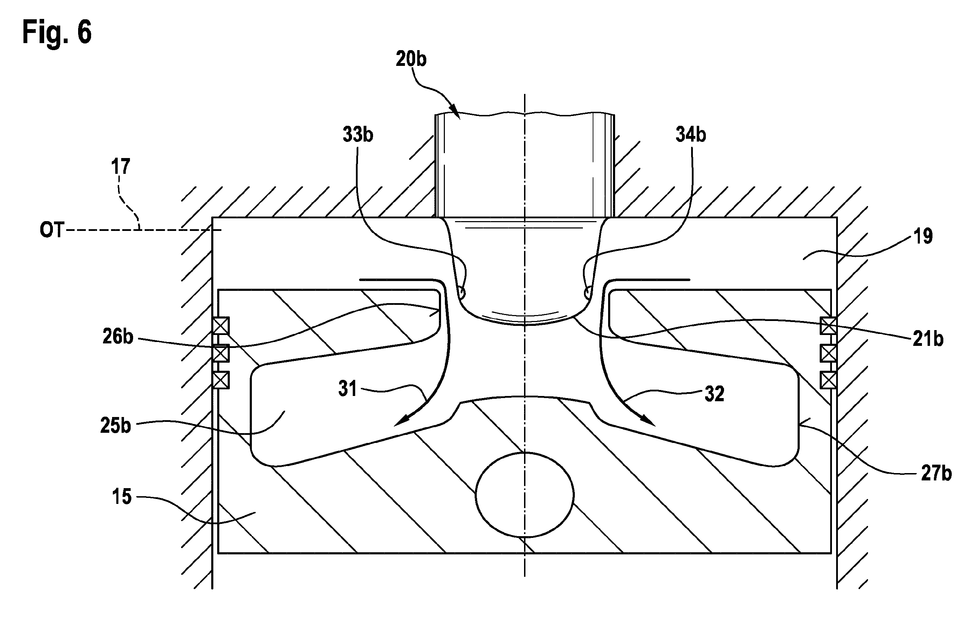

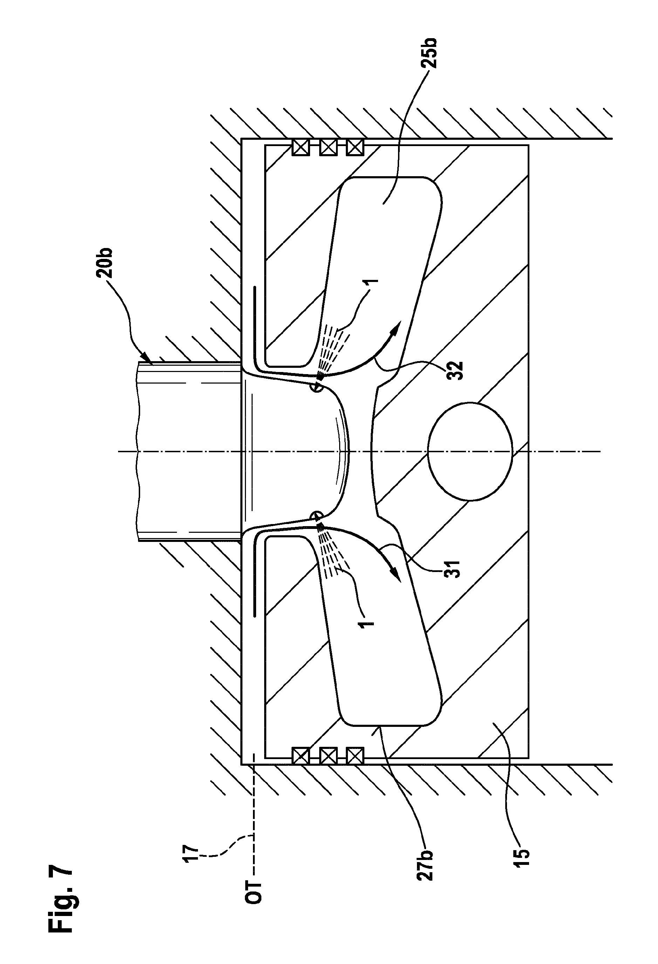

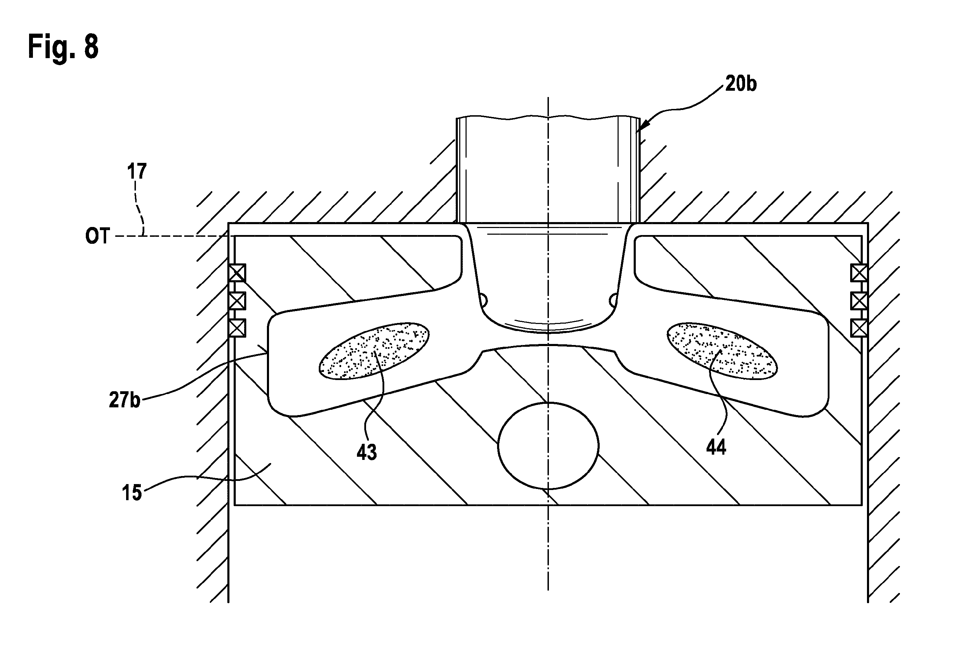

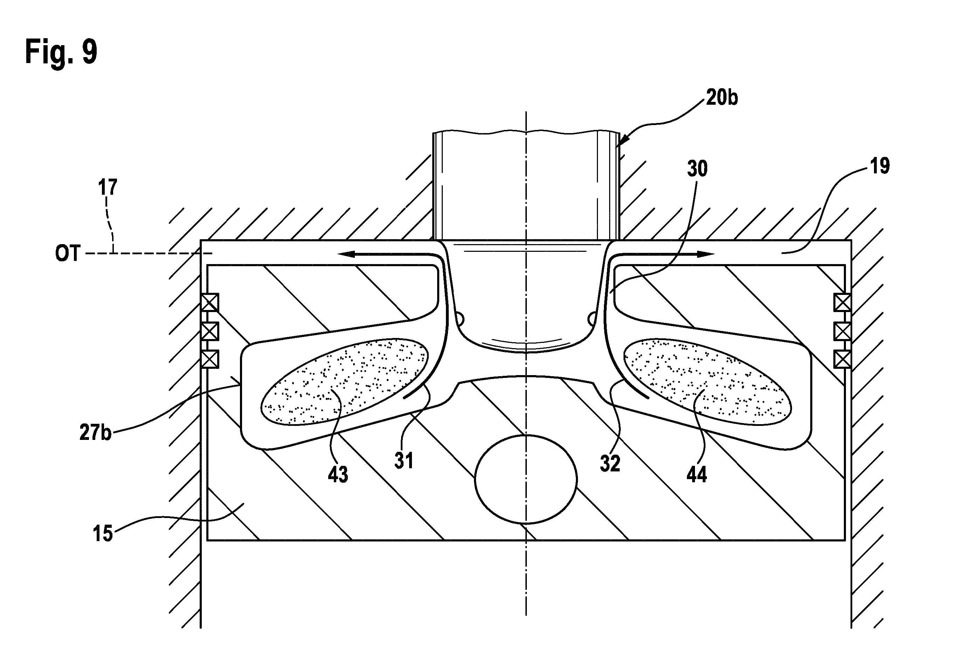

In den Fig. 6 bis 9 ist während verschiedener Bewegungsphasen des Kolbens 15 der Einspritzvorgang anhand des Kraftstoffeinspritzventils 20b dargestellt. In der Fig. 6 ist die Stellung des Kolbens 15 in einem Kurbelwellenwinkel etwa 30° vor erreichen des oberen Totpunkts 17 dargestellt. Dabei taucht der Endbereich 21b des Kraftstoffeinspritzventils 20b bereits in den ersten Abschnitt 26b der Ausnehmung 25b ein, die Einspritzöffnungen 33b, 34b sind jedoch noch verschlossen. Ferner erkennt man, dass durch die Aufwärtsbewegung des Kolbens 15 bereits ein Überströmen aus dem Totvolumen 19 in den zweiten Abschnitt 27b der Ausnehmung 25b erfolgt (Luftströmung 31, 32). In der Fig. 7 hat der Kolben 15 eine Stellung von 20° Kurbelwellenwinkel vor Erreichen des oberen Totpunkts 17 erreicht. Die Einspritzöffnungen 33b, 34b sind geöffnet, und der Kraftstoffstrahl 1 wird in den zweiten Abschnitt 27b der Ausnehmung 25b eingespritzt. In der Fig. 8 ist die Stellung des Kolbens 15 beim Erreichen des oberen Totpunkts 17 dargestellt. Der Einspritzvorgang ist abgeschlossen und in den Bereichen 43, 44 ist zündfähiges Kraftstoff-Luftgemisch vorhanden, bei dem die Verbrennung bereits eingesetzt hat. In der Fig. 9 ist eine Stellung des Kolbens 15 dargestellt, bei der sich dieser bereits wieder in Richtung des unteren Totpunkts 16 bewegt. In der dargestellten Stellung des Kolbens 15 befindet sich dieser etwa 20° Kurbelwellenwinkel nach Passieren des oberen Totpunkts 17. Man erkennt, dass sich die Bereiche 43, 44 vergrößert haben, wobei eine entsprechende Druckerhöhung im Brennraum 10 stattfindet. Gleichzeitig vergrößert sich durch die Abwärtsbewegung des Kolbens 15 das Totvolumen 19 im Brennraum 10, so dass eine Rückströmung über den Strömungsspalt 30 in Richtung des Totvolumens 19 erfolgt.

Die soweit beschriebene Brennkraftmaschine 100 bzw. deren Brennraum 10 können in vielfältiger Art und Weise abgewandelt bzw. modifiziert werden ohne vom Erfindungsgedanken abzuweichen.

## Patentansprüche

1. Brennkraftmaschine (100) mit einem Brennraum (10), in dem ein zwischen einem unteren Totpunkt (UT) und einem oberen Totpunkt (OT) entlang einer Kolbenlängsachse (12) auf- und abbewegbarer Kolben (15) angeordnet ist, und mit einem in den Brennraum (10) hineinragenden Kraftstoffeinspritzventil (20; 20a bis 20c) mit wenigstens einer Einspritzöffnung 33; 33b, 34; 34b; 36, 37) zum Einspritzen von Kraftstoff in den Brennraum (10), wobei der Kolben (15) auf der dem Kraftstoffeinspritzventil (20; 20a bis 20c) zugewandten Seite wenigstens eine Ausnehmung (25; 25b; 25c; 25d) aufweist,
**dadurch gekennzeichnet,**
**dass** das Kraftstoffeinspritzventil (20; 20a bis 20c) mit einem dem Kolben (15) zugewandten Endbereich (21; 21a bis 21d) zumindest im Bereich des oberen Totpunkt (OT) des Kolbens (15) mit einem Teilabschnitt in die Ausnehmung (25; 25b; 25c; 25d) des Kolbens (15) hineinragt, und dass die Ausnehmung (25; 25b; 25c; 25d) einen Abschnitt (26; 26b; 26c) aufweist, der zumindest den in die Ausnehmung (25; 25b; 25c; 25d) hineinragenden Teilabschnitt des Kraftstoffeinspritzventils (20; 20a bis 20c) unter Ausbildung eines Strömungsspalts (30; 30b) mit geringem Abstand umgibt.

2. Brennkraftmaschine nach Anspruch 1,
**dadurch gekennzeichnet,**
**dass** sich der Abschnitt (26; 26b; 26c) der Ausnehmung (25; 25b; 25c; 25d) in Richtung zu der dem Kraftstoffeinspritzventil (20; 20a bis 20c) abgewandten Seite in Art eines Hinterschnitts erweitert.

3. Brennkraftmaschine nach Anspruch 1 oder 2,
**dadurch gekennzeichnet,**
**dass** zumindest der Teilabschnitt des Endbereichs (21; 21 a) des Kraftstoffeinspritzventils (20; 20a) zylindrisch ausgebildet und vorzugsweise in der Kolbenlängsachse (12) angeordnet ist, und dass die Ausnehmung (25; 25a) symmetrisch zur Kolbenlängsachse (12) ausgebildet ist.

4. Brennkraftmaschine nach einem der Ansprüche 1 bis 3,
**dadurch gekennzeichnet,**
**dass** die Ausnehmung (25; 25c) in dem den Teilabschnitt des Kraftstoffeinspritzventils (20a; 20c) unmittelbar umgebenden Bereich einen Wandabschnitt (35) aufweist, in dessen Richtung beim oder vor dem Eintauchen des Endbereichs (21a; 21c) Kraftstoff über die wenigstens eine Einspritzöffnung (33, 34; 36) abgegeben wird.

5. Brennkraftmaschine nach Anspruch 4,
**dadurch gekennzeichnet,**
**dass** die wenigstens eine Einspritzöffnung (33, 34; 36) zumindest im Wesentlichen in Richtung auf den Wandabschnitt (35) ausgerichtet ist.

6. Brennkraftmaschine nach einem der Ansprüche 1 bis 5,
**dadurch gekennzeichnet,**
**dass** die wenigstens eine Einspritzöffnung (33b, 34b; 37) des Kraftstoffeinspritzventils (20b; 20c) beim Erreichen des oberen Totpunkts (OT) des Kolbens (15) unterhalb des Abschnitts (26b; 26c) der Ausnehmung (25b; 25c) angeordnet ist.

7. Brennkraftmaschine nach einem der Ansprüche 1 bis 6,
**dadurch gekennzeichnet,**
**dass** der zwischen dem Teilabschnitt des Endbereichs (21; 21a bis 21d) des Kraftstoffeinspritzventils (20; 20a bis 20c) und dem Abschnitt (26; 26b; 26c) ausgebildete Strömungsspalt (30; 30b) eine Größe zwischen 1 mm und 5mm, vorzugsweise zwischen 2mm und 4mm, aufweist.

8. Brennkraftmaschine nach einem der Ansprüche 1 bis 7,
**dadurch gekennzeichnet,**
**dass** in dem Brennraum (10) neben dem Endbereich (21 d) des Kraftstoffeinspritzventils (20) eine Glüheinrichtung (40) in Form eines Glühstifts angeordnet ist, und dass der Glühstift im Bereich des oberen Totpunkts (OT) des Kolbens (15) in die Ausnehmung (25) bereichsweise eintaucht.

9. Kraftstoffeinspritzventil (20; 20a bis 20c) zur Verwendung in einer Brennkraftmaschine (100) nach einem der Ansprüche 1 bis 8.

10. Kraftstoffeinspritzventil nach Anspruch 9,
**dadurch gekennzeichnet,**
**dass** der Einspritzdruck des Kraftstoffs in den Brennraum (10) bei Ausbildung einer selbstzündenden Brennkraftmaschine (100) mehr als 150bar, und bei Ausbildung einer fremdzündenden Brennkraftmaschine (100) mehr als 70bar beträgt.
